# EUROPEAN PATENT SPECIFICATION

(11) **EP 3 560 986 B1**
(45) Date of publication and mention of the grant of the patent: **09.10.2024**
(21) Application number: 17889101.6
(22) Date of filing: 19.09.2017
(51) Int. Cl.: C08F 220/56, C08F 220/18, C08J 5/04, C08L 23/06

(54) **RESIN COMPOSITION FOR PULP FIBRILLATION, FIBER-REINFORCED MATERIAL, AND MOLDING MATERIAL**
HARZZUSAMMENSETZUNG FÜR ZELLSTOFFFIBRILLIERUNG, FASERVERSTÄRKTES MATERIAL UND FORMMATERIAL
COMPOSITION DE RÉSINE POUR LA FIBRILLATION DE PÂTE, MATÉRIAU RENFORCÉ DE FIBRES, ET MATÉRIAU DE MOULAGE

(30) Priority: 26.12.2016 JP 2016251154
(43) Date of publication of application: 30.10.2019
(73) Proprietor: DIC Corporation, Tokyo 174-8520 (JP)
(72) Inventor: KAJIKAWA Masahiro, Takaishi-shi Osaka 592-0001 (JP); TAKEUCHI Yoko, Ichihara-shi Chiba 290-8585 (JP)
(74) Representative: Kraus & Lederer PartGmbB
(86) International application number: PCT/JP2017/033639
(87) International publication number: WO 2018/123158

(56) References cited:
- WO-A1-2014/192634
- WO-A1-2015/163405
- WO-A1-2016/042930
- JP-A- 2008 024 788
- JP-A- 2014 162 880
- JP-A- 2015 048 375
- No further relevant documents disclosed

## Description

### Technical Field

The present invention relates to a resin composition useful for fibrillation of pulp, a fiber-reinforced material, and a molding material.

### Background Art

Cellulose nanofibers, which have recently been developed, are naturally occurring nano-fillers originated from plants and attract attention as components for composite materials for resins that have low specific gravity and high strength. In addition, a master batch that contains cellulose nanofibers at a high concentration is known, the master batch being obtained by cutting cellulose into fine fibers in a polyester resin (see, for example, PTL 1).

However, the fibrillation of cellulose in a composite of the master batch and a thermoplastic resin, in particular, a polyolefin resin such as polyethylene is unfortunately insufficient, leading to a small effect of cellulose addition on the mechanical strength of a resulting molded article.

WO 2015/163405 A1 describes an additive for a cellulose fiber composite resin, a modified cellulose fiber composition, a resin composition and a method for producing the resin composition. The additive for a cellulose fiber composite resin is a polymer having a specific structural unit (1) and a specific structural unit (2) as shown below, and is characterized in that: the mass of the specific structural unit (1), excluding the functional groups represented by R1, R2 and R3, is 5 to 50 mass-% of the entire polymer; the total mass of the functional groups represented by R2, R3, and R5 in the specific structural unit (1) and the structural unit (2) is 20 to 70 mass-% of the entire polymer; the mass of the specific structural unit (1) and the specific structural unit (2) is 70 to 100 mass-% of the entire polymer; and the glass transition temperature is at least 50°C.

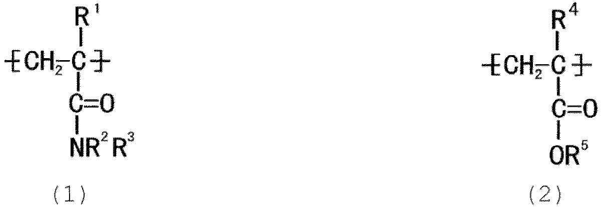

Thus, there has been required a material that can sufficiently exhibit a cellulose addition effect also in reinforcement of a polyolefin resin or the like.

### Citation List

### Patent Literature

PTL 1: Japanese Patent No. 5273313

### Summary of Invention

### Technical Problem

An object of the present invention is to provide a resin composition that is excellent in pulp fibrillation and thus can sufficiently exhibit a cellulose addition effect to impart high mechanical strength to a molded article.

### Solution to Problem

As a result of intensive studies to solve the problem, the present inventors have found that a resin composition for pulp fibrillation that includes an acrylic resin (A) that has a weight average molecular weight of 5,000 to 100,000 and is made from starting materials including, as essential starting materials, an alkyl (meth)acrylate ester (a1) having an alkyl group with 6 to 18 carbon atoms and an acrylic monomer (a2) having an amide group is excellent in pulp fibrillation and can impart high mechanical strength to a molded article, thus completing the present invention.

That is, the present invention provides the resin composition for pulp fibrillation defined in claim 1 as well as the fiber-reinforced material defined in claim 4 and the molding material defined in claim 5. Preferred embodiments of the resin composition are defined in claims 2 and 3.

### Advantageous Effects of Invention

The resin composition for pulp fibrillation of the present invention, which is excellent in pulp fibrillation, can effectively reinforce the mechanical strength of a molded body that contains a matrix resin, such as polyethylene, and cellulose fibers.

### Description of Embodiments

The resin composition of the present invention is defined in claim 1 and includes an acrylic resin (A) that has a weight average molecular weight of 5,000 to 100,000 and is made from starting materials including, as essential starting materials, an alkyl (meth)acrylate ester (a1) having an alkyl group with 6 to 18 carbon atoms and an acrylic monomer (a2) having an amide group.

Note that in the present invention, the term "(meth)acrylic acid" refers to either one or both of "acrylic acid" and "methacrylic acid", the term "(meth)acrylate" refers to either one or both of "acrylate" and "methacrylate", and the term "(meth)acrylamide" refers to either one of both of "acrylamide" and "methacrylamide". In addition, an alkyl group in the present invention includes a cycloalkyl group.

Examples of the alkyl (meth)acrylate esters (a1) having an alkyl group with 6 to 18 carbon atoms include cyclohexyl (meth)acrylate, hexyl (meth)acrylate, 2-ethylhexyl (meth)acrylate, lauryl (meth)acrylate, and stearyl (meth)acrylate, and among them, lauryl (meth)acrylate is preferred in that it is excellent in pulp fibrillation and imparts higher mechanical strength to a molded article. Note that the alkyl (meth)acrylate esters (a1) can be used alone or in combination of two or more thereof.

Examples of the acrylic monomers (a2) having an amide group include (meth)acrylamide, N-methyl(meth)acrylamide, N-ethyl(meth)acrylamide, N-propyl(meth)acrylamide, N,N-dimethyl(meth)acrylamide, N,N-diethyl(meth)acrylamide, N,N-dipropyl(meth)acrylamide, N-isopropyl(meth)acrylamide, N-dodecylacrylamide, N-propoxymethylacrylamide, 6-(meth)acrylamidohexanoic acid, (meth)acryloylmorpholine, N-methylol(meth)acrylamide, N-(2-hydroxyethyl) (meth)acrylamide, N,N-dimethylaminopropyl(meth)acrylamide, and N-[2,2-dimethyl-3-(dimethylamino)propyl]acrylamide. Note that the acrylic monomers (a2) can be used alone or in combination of two or more thereof.

In addition, as a starting material for the acrylic resin (A), in addition to the alkyl (meth)acrylate ester (a1) and the acrylic monomer (a2), another monomer (a3) may be used as needed.

Examples of the monomers (a3) other than (a1) and (a2) include: monomers having a carboxyl group, such as (meth)acrylic acid, maleic acid (anhydride), fumaric acid, itaconic acid (anhydride); (meth)acrylates having a functional group, such as 2-methylaminoethyl (meth)acrylate, 2-hydroxyethyl (meth)acrylate, 2-hydroxypropyl (meth)acrylate, 2-hydroxybutyl (meth)acrylate, 4-hydroxybutyl (meth)acrylate, tetrahydrofurfuryl (meth)acrylate, γ-methacryloxypropyltrimethoxysilane, vinyltriethoxysilane, and glycidyl (meth)acrylate; methyl (meth)acrylate, ethyl (meth)acrylate, propyl (meth)acrylate, butyl (meth)acrylate, isobornyl (meth)acrylate, benzyl (meth)acrylate, diethyleneglycol di(meth)acrylate, 1,4-butanediol di(meth)acrylate, 1,6-hexanediol di(meth)acrylate, trimethylol propane tri(meth)acrylate, glycerol di(meth)acrylate, styrene, α-methylstyrene, p-methylstyrene, and chloromethylstyrene. Among them, the monomer (a3) other than (a1) and (a2) is preferably methyl (meth)acrylate, and more preferably methyl acrylate. In other words, the starting materials for the acrylic resin (A) preferably further include methyl (meth)acrylate, and more preferably methyl acrylate. Note that the monomers (a3) other then (a1) and (a2) can be used alone or in combination of two or more thereof.

The content of the alkyl (meth)acrylate ester (a1) in the monomers used as starting materials for the acrylic resin (A) is preferably in the range of 30 to 90% by mass, more preferably in the range of 30 to 80% by mass, and further preferably in the range of 30 to 47.5% by mass, particularly preferably in the range of 30 to 45% by mass, and particularly preferably in the range of 35 to 45% by mass, so that the fibrillation and the mechanical strength of the resulting molded article can be more improved.

The content of the acrylic monomer (a2) having an amide group in the monomers used as starting materials for the acrylic resin (A) is in the range of 55 to 70% by mass, and preferably in the range of 55 to 65% by mass, so that the fibrillation and the mechanical strength of the resulting molded article can be more improved.

In addition, the weight average molecular weight of the acrylic resin (A) is in the range of 5,000 to 100,000 and more preferably in the range of 10,000 to 50,000 since the fibrillation and the mechanical strength of the resulting molded article are superior. Here, the weight average molecular weight is a value converted in terms of polystyrene based on a measurement by gel permeation chromatography (hereinafter abbreviated as "GPC").

The concentration of amide groups in the acrylic resin (A) is preferably in the range of 1.4 to 9.9 mmol/g and more preferably in the range of 2.8 to 9.2 mmol/g since the fibrillation and the mechanical strength of the resulting molded article are more improved. Note that the concentration of amide groups is calculated from the amount of the monomers added as starting materials for the acrylic resin (A).

The acrylic resin (A) can be produced by, for example, subjecting the alkyl (meth)acrylate ester (a1) and the acrylic monomer (a2) having an amide group, and as needed, the monomer (a3) other than (a1) and (a2) to radical polymerization in an organic solvent in the presence of a polymerization initiator at a temperature of 60 to 140°C. Note that the organic solvent can be removed in a solvent removal step after the radical polymerization.

Examples of the organic solvents that can be used include: aromatic solvents, such as toluene and xylene; an alicyclic solvent, such as cyclohexane; ester solvents, such as butyl acetate and ethyl acetate; isobutanol, n-butanol, isopropyl alcohol, sorbitol, and a cellosolve solvent such as propylene glycol monomethyl ether acetate; and ketone solvents, such as methyl ethyl ketone and methyl isobutyl ketone. The solvents can be used alone or in combination of two or more thereof.

Examples of the polymerization initiator include: azo compounds, such as 2,2'-azobis(isobutyronitrile), 2,2'-azobis(2-methylbutyronitrile), and azobis(cyanovaleric acid); organic peroxides, such as tert-butyl peroxypivalate, tert-butyl peroxybenzoate, tert-butyl peroxy-2-ethylhexanoate, di-tert-butyl peroxide, di-tert-butyl hydroperoxide, cumene hydroperoxide, benzoyl peroxide, and tert-butyl hydroperoxide; and inorganic peroxides, such as hydrogen peroxide, ammonium persulfate, potassium persulfate, and sodium persulfate. The polymerization initiators can be used alone or in combination of two or more thereof. In addition, the polymerization initiator is preferably used in an amount in the range of 0.1 to 10% by mass based on the total amount of the monomers as starting materials for the acrylic resin (A).

The resin composition for pulp fibrillation of the present invention contains the acrylic resin (A), and as needed, the following substance can also be used together: a thermoplastic resin, for example, an olefin resin, such as a polyethylene resin (PE), such as a high-density polyethylene (HDPE), a low-density polyethylene (LDPE), or a biopolyethylene, a polypropylene resin (PP), a vinyl chloride resin, a styrene resin, a (meth)acrylic resin, or a vinyl ether resin, a nylon resin, a polyamide resin, such as polyamide 6 (PA6, product of ring opening polymerization of ε-caprolactam), polyamide 66 (PA66, polyhexamethylene adipamide), polyamide 11 (PA11, polyamide produced by ring opening polycondensation of undecanelactam), or polyamide 12 (PA12, polyamide obtained by ring opening polycondensation of lauryl lactame), a polycarbonate resin, a polysulfone resin, a polyester resin, or a cellulose resin, such as triacetyl cellulose or diacetyl cellulose, as well as an additive, for example, a compatibilizer, a surfactant, a polysaccharide, such as a starch or alginic acid, a natural protein, such as gelatin, glue, or casein, tannin, an inorganic compound, such as zeolite, ceramic, or a metal powder, a colorant, a plasticizer, a fragrance, a pigment, a fluidity modifier, a leveling agent, a conductor, an antistatic agent, a UV absorber, a UV dispersant, a deodorant.

The fiber-reinforced material of the present invention includes the resin composition for pulp fibrillation and cellulose fibers. In an example of a method of fibrillating pulp using the resin composition for pulp fibrillation, a mixture of the resin composition for pulp fibrillation and pulp is processed with a known kneader, such as a bead mill, a ultrasonic homogenizer, an extruder, such as a single screw extruder or a twin screw extruder, a Bunbury mixer, a grinder, a pressure kneader, and a twin roll mill.

The pulp may be wood pulp or non-wood pulp. Examples of wood pulps include mechanical pulps and chemical pulps, and among them, chemical pulps which have a small lignin content are preferred. Examples of chemical pulps include a sulfide pulp, a kraft pulp, and an alkali pulp. Examples of non-wood pulp include those produced from straw, bagasse, kenaf, bamboo, reed, paper mulberry, and flax.

The molding material of the present invention contains the fiber-reinforced material and a thermoplastic resin as a matrix resin. Examples of the thermoplastic resins include polyolefin resins, polycarbonate resins, polyamide resins, polyester resins, and epoxy resins, and among them, a polyolefin resin is preferred and polyethylene is more preferred.

The molding material of the present invention, which provides a molded article having high mechanical strength, can be used for production of various molded articles.

### Examples

The present invention will be described in detail below with reference to examples and comparative examples. Example 2 is for reference and/or comparison only. Note that the weight average molecular weights of acrylic resins are measured under the following GPC measurement conditions

### [GPC Measurement condition]

Measurement apparatus: high speed GPC apparatus ("HLC-8220GPC" from Tosoh Corporation)
Column: the following columns from Tosoh Corporation were connected in series and used.
   "TSK gel G5000"(7.8 mm I.D. × 30 cm) × 1
   "TSK gel G4000"(7.8 mm I.D. × 30 cm) × 1
   "TSK gel G3000"(7.8 mm I.D. × 30 cm) × 1
   "TSK gel G2000"(7.8 mm I.D. × 30 cm) × 1
Detector: RI (refractive index detector)
Column temperature: 40°C
Eluent: tetrahydrofuran (THF)
Flow rate: 1.0 mL/min
Injection: 100 µL (tetrahydrofuran solution of sample concentration of 4 mg/mL)
Standard samples: the following monodispersed polystyrenes were used to prepare a calibration curve.

### (Monodispersed polystyrenes)

"TSK gel standard polystyrene A-500" from Tosoh Corporation
"TSK gel standard polystyrene A-1000" from Tosoh Corporation
"TSK gel standard polystyrene A-2500" from Tosoh Corporation
"TSK gel standard polystyrene A-5000" from Tosoh Corporation
"TSK gel standard polystyrene F-1" from Tosoh Corporation
"TSK gel standard polystyrene F-2" from Tosoh Corporation
"TSK gel standard polystyrene F-4" from Tosoh Corporation
"TSK gel standard polystyrene F-10" from Tosoh Corporation
"TSK gel standard polystyrene F-20" from Tosoh Corporation
"TSK gel standard polystyrene F-40" from Tosoh Corporation
"TSK gel standard polystyrene F-80" from Tosoh Corporation
"TSK gel standard polystyrene F-128" from Tosoh Corporation
"TSK gel standard polystyrene F-288" from Tosoh Corporation
"TSK gel standard polystyrene F-550" from Tosoh Corporation

### (Example 1: production and evaluation of resin composition for pulp fibrillation (1))

Into a four neck flask equipped with a stirrer, a reflux condenser, a thermometer, and a nitrogen inlet tube, 123 parts by mass of isopropyl alcohol (hereinafter abbreviated as "IPA") was put and heated to 80°C, and a dissolved mixture of 135.3 parts by mass of acrylamide, 108.2 parts by mass of lauryl methacrylate, 2.5 parts by mass of methyl acrylate, 246 parts by mass of IPA, 4 parts by mass of a polymerization initiator ("V-59" from Wako Pure Chemical Industries, Ltd., azo initiator), and 10 parts by mass of methyl ethyl ketone (hereinafter abbreviated as "MEK") was dropwise added over 2 hours, followed by a reaction at 73 to 77°C. Then, the inside of the reaction vessel was held within the same temperature range for 2 hours to complete the polymerization reaction. The solvent was removed from the obtained resin solution using a vacuum pump (0.08 to 0.095 MPa, 60°C), followed by drying with heat at 80°C for 30 minutes using a drier, thereby obtaining a resin composition for pulp fibrillation (1) as a solid substance. The resin composition for pulp fibrillation (1) had a weight average molecular weight of 15,000.

### [Production of fiber-reinforced material]

A pulp board (from Howe Sound Pulp and Paper Corporation) was impregnated with water to give a solid content of 50 parts by mass, was pulverized, and was mixed with the same mass in terms of the solid content of a dried powder of the resin composition for pulp fibrillation (1) obtained in Example 1. The mixture was stirred with a pressure kneader for 90 minutes to obtain a fiber-reinforced material (1).

### [Production of molding material]

2 parts by mass of the fiber-reinforced material (1) obtained above, 8 parts by mass of polyethylene (HDPE 320J was mechanically pulverized), and 0.3 parts by mass of an antioxidant ("Irganox 1010" from BASF Japan) were mixed with a Henschel mixer for 2 minutes, and melt-kneaded with a twin screw extruder (from Technovel Corporation) heated at 140°C to obtain pellets of the molding material (1) having a pulp solid content of 10% by mass.

### [Melt-mixing conditions]

Screw diameter: 25 mm
Screw rotation speed: 300 rpm
Discharge rate: 800 g/hr
Set temperature: 140°C

### [Production of molded article]

Pellets of the molding material (1) obtained above were processed with an injection molding machine (iM18 from Sumitomo Heavy Industries, Ltd.) to produce a molded piece according to ASTM No.4 (1.6 mm thickness).
Temperature conditions: molding machine 140°C, mold temperature 40°C
Mold ASTM No.4 (1.6 mm thickness)

### [Evaluation of mechanical strength of molded article]

The test piece having 1.6 mm thickness obtained above was subjected to a tensile test with a tensile tester ("AUTOGRAPH AGS-X" from Shimadzu Corporation).

Tensile rate: 10 mm/min
Distance between chucks: 64 mm

### [Evaluation of fibrillation]

The pellets of the molding material (1) obtained above were placed between polyethylene terephthalate sheets, were pressed into 1 mm thickness at 160°C, and then a central portion of 1 cm² was cut and was wrapped with a metal mesh. After extraction of the resin with heat xylene, the cellulose remaining in the metal mesh was dried, and while observing the resulting sample with an SEM at a magnification of 5000×, arbitrary three portions in the sample were imaged to evaluate the fibrillation according to the following criteria.
A: There are no non-fibrillated fibers with a fibrous diameter of 5 µm or more in the observed field.
B: There are one or more non-fibrillated fibers with a fibrous diameter of 5 µm or more and less than 10 µm in the observed field.
C: There are one or more non-fibrillated fibers with a fibrous diameter of 10 µm or more in the observed field.

### (Example 2: production and evaluation of resin composition for pulp fibrillation (2) - for reference and/or comparison only)

Into a four neck flask equipped with a stirrer, a reflux condenser, a thermometer, and a nitrogen inlet tube, 123 parts by mass of IPA was put and heated to 80°C, and a dissolved mixture of 110.7 parts by mass of acrylamide, 110.7 parts by mass of lauryl methacrylate, 12.3 parts by mass of methacrylic acid, 12.3 parts by mass of 2-hydroxyethyl methacrylate, 246 parts by mass of IPA, 4 parts by mass of a polymerization initiator ("V-59" from Wako Pure Chemical Industries, Ltd., azo initiator), and 10 parts by mass of methyl ethyl ketone (hereinafter abbreviated as "MEK") was dropwise added over 2 hours, followed by a reaction at 73 to 77°C. Then, the inside of the reaction vessel was held within the same temperature range for 2 hours to complete the polymerization reaction. The solvent was removed from the obtained resin solution using a vacuum pump (0.08 to 0.095 MPa, 60°C), followed by drying with heat at 80°C for 30 minutes using a drier, thereby obtaining a resin composition for pulp fibrillation (2) as a solid substance. The resin composition for pulp fibrillation (2) had a weight average molecular weight of 17,000.

Pellets of the molding material (2) were produced in the same manner as in Example 1 except that the resin composition for pulp fibrillation (1) used in Example 1 was changed to the resin composition for pulp fibrillation (2), and the mechanical strength and the fibrillation of the molded article were evaluated.

### (Comparative Example 1: production and evaluation of resin composition for pulp fibrillation (R1))

Into a four neck flask equipped with a stirrer, a reflux condenser, a thermometer, and a nitrogen inlet tube, 123 parts by mass of IPA was put and heated to 80°C, and a dissolved mixture of 110.7 parts by mass of acrylamide, 110.7 parts by mass of methyl methacrylate, 12.3 parts by mass of methacrylic acid, 12.3 parts by mass of 2-hydroxyethyl methacrylate, 246 parts by mass of IPA, 4 parts by mass of a polymerization initiator ("V-59" from Wako Pure Chemical Industries, Ltd., azo initiator), and 10 parts by mass of methyl ethyl ketone (hereinafter abbreviated as "MEK") was dropwise added over 2 hours, followed by a reaction at 73 to 77°C. Then, the inside of the reaction vessel was held within the same temperature range for 2 hours to complete the polymerization reaction. The solvent was removed from the obtained resin solution using a vacuum pump (0.08 to 0.095 MPa, 60°C), followed by drying with heat at 80°C for 30 minutes using a drier, thereby obtaining a resin composition for pulp fibrillation (R1) as a solid substance. The resin composition for pulp fibrillation (R1) had a weight average molecular weight of 17,000.

Pellets of the molding material (R1) were produced in the same manner as in Example 1 except that the resin composition for pulp fibrillation (1) used in Example 1 was changed to the resin composition for pulp fibrillation (R1), and the mechanical strength and the fibrillation of the molded article were evaluated

Table 1 shows the compositions and evaluation results of the resin compositions for pulp fibrillation (1), (2), and (R1) obtained in Example 1, Example 2, and Comparative Example 1.

**[Table 1]**

| Table 1 | | Example 1 | Example 2* | Comparative Example 1 |
|---|---|---|---|---|
| Resin composition for pulp fibrillation | | (1) | (2) | (R1) |
| Monomer ratio (by mass) | Acrylamide | 55 | 45 | 45 |
| | Lauryl methacrylate | 44 | 45 | |
| | Methyl acrylate | 1 | | |
| | Methyl methacrylate | | | 45 |
| | Methacrylic acid | | 5 | 5 |
| | 2-Hydroxyethyl methacrylate | | 5 | 5 |
| Weight average molecular weight | | 15,000 | 17,000 | 17,000 |
| Tensile strength at break (MPa) | | 37.2 | 34.4 | 27.7 |
| Tensile modulus (GPa) | | 3.7 | 2.6 | 2.0 |
| Tensile strain (%) | | 4.1 | 5.1 | 21 |
| Fibrillation | | A | B | C |

| | | | | |
|---|---|---|---|---|
| *For reference and/or comparison only | | | | |

It was found that the resin compositions for pulp fibrillation of the present invention of Examples 1 and 2 are superior in pulp fibrillation and provide molded bodies having high tensile strength at break.

On the other hand, Comparative Example 1 is an example where no alkyl (meth)acrylate ester having an alkyl group with 6 to 18 carbon atoms was used as a starting material for the acrylic resin, and it was found that the resin compositions for pulp fibrillation of Comparative Example 1 is inferior in pulp fibrillation and provides a molded article having insufficient tensile strength at break and large tensile strain.

## Claims

1. A resin composition for pulp fibrillation, comprising an acrylic resin (A) that has a weight average molecular weight of 5,000 to 100,000, the weight average molecular weight being a value converted in terms of polystyrene based on a measurement by gel permeation chromatography, and is made from starting materials including, as essential starting materials,
an alkyl (meth)acrylate ester (a1) having an alkyl group with 6 to 18 carbon atoms and an acrylic monomer (a2) having an amide group, **characterized in that** the content of the acrylic monomer (a2) in monomers as the starting materials for the acrylic resin (A) is in the range of 55 to 70% by mass.

2. The resin composition for pulp fibrillation according to claim 1, wherein the content of the alkyl (meth)acrylate ester (a1) in monomers as the starting materials for the acrylic resin (A) is in the range of 30 to 45% by mass.

3. The resin composition for pulp fibrillation according to claim 1 or 2, wherein the starting materials for the acrylic resin (A) further include methyl (meth)acrylate.

4. A fiber-reinforced material comprising the resin composition according to any one of claims 1 to 3 and cellulose fibers.

5. A molding material comprising the fiber-reinforced material according to claim 4 and a thermoplastic resin.

## Patentansprüche

1. Harzzusammensetzung für die Zellstofffibrillierung, umfassend ein Acrylharz (A), das ein gewichtsmittleres Molekulargewicht von 5.000 bis 100.000 aufweist, wobei das gewichtsmittlere Molekulargewicht ein in Polystyrol umgerechneter Wert ist, der auf einer Messung durch Gelpermeationschromatographie beruht, und das aus Ausgangsmaterialien hergestellt ist, die als wesentliche Ausgangsmaterialien Folgendes umfassen: einen Alkyl(meth)acrylatester (a1) mit einer Alkylgruppe mit 6 bis 18 Kohlenstoffatomen und ein Acrylmonomer (a2) mit einer Amidgruppe, **dadurch gekennzeichnet, dass** der Gehalt des Acrylmonomers (a2) an Monomeren als Ausgangsmaterialien für das Acrylharz (A) im Bereich von 55 bis 70 Massenprozent liegt.

2. Harzzusammensetzung für die Zellstofffibrillierung nach Anspruch 1, wobei der Gehalt des Alkyl(meth)acrylat-esters (a1) an Monomeren als Ausgangsmaterialien für das Acrylharz (A) im Bereich von 30 bis 45 Massenprozent liegt.

3. Harzzusammensetzung für die Zellstofffibrillierung nach Anspruch 1 oder 2, wobei die Ausgangsmaterialien für das Acrylharz (A) außerdem Methyl(meth)acrylat enthalten.

4. Faserverstärktes Material, umfassend die Harzzusammensetzung nach einem der Ansprüche 1 bis 3 und Zellulosefasern.

5. Formmasse, die das faserverstärkte Material nach Anspruch 4 und ein thermoplastisches Harz enthält.

## Revendications

1. Composition de résine pour la fibrillation de la pâte à papier, comprenant une résine acrylique (A) qui a un poids moléculaire moyen en poids de 5 000 à 100 000, le poids moléculaire moyen en poids étant une valeur convertie en termes de polystyrène sur la base d'une mesure par chromatographie par perméation de gel, et qui est fabriquée à partir de matières premières comprenant, comme matières premières essentielles, un ester de (méth)acrylate d'alkyle (a1) ayant un groupe alkyle de 6 à 18 atomes de carbone et un monomère acrylique (a2) ayant un groupe amide, **caractérisé en ce que** la teneur du monomère acrylique (a2) dans les monomères comme matières premières pour la résine acrylique (A) est comprise entre 55 et 70 % en masse.

2. Composition de résine pour la fibrillation de la pâte à papier selon la revendication 1, dans laquelle la teneur en ester de (méth)acrylate d'alkyle (a1) dans les monomères utilisés comme matières premières pour la résine acrylique (A) est comprise entre 30 et 45 % en masse.

3. Composition de résine pour la fibrillation de la pâte à papier selon la revendication 1 ou 2, dans laquelle les matières premières de la résine acrylique (A) comprennent en outre du (méth)acrylate de méthyle.

4. Matériau renforcé par des fibres comprenant la composition de résine selon l'une des revendications 1 à 3 et des fibres de cellulose.

5. Matériau de moulage comprenant le matériau renforcé par des fibres selon la revendication 4 et une résine thermoplastique.
